# EUROPEAN PATENT APPLICATION

(11) **EP 2 487 832 A1**
(43) Date of publication of application: **15.08.2012**
(21) Application number: 10829525.4
(22) Date of filing: 10.11.2010
(51) Int. Cl.: H04L 12/24

(54) **METHOD AND APPARATUS FOR CONSTRUCTING SERVICE MESSAGE**

(30) Priority: 10.11.2009 CN 200910110172
(71) Applicant: Huawei Technologies Co., Ltd., Shenzhen, Guangdong 518129 (CN)
(72) Inventor: ZHANG, Weibing, Shenzhen Guangdong 518129 (CN)
(74) Representative: Pfenning, Meinig & Partner GbR
(86) International application number: PCT/CN2010/078591
(87) International publication number: WO 2011/057561

(57) **Abstract**

Embodiments of the present invention provide a method for generating a service message, including the following steps: receiving a service message sent by a service provider SP device and content sent by a content provider CP device; generating a service message including corresponding content, according to a preset corresponding relation between the service and the content, or according to a preset corresponding relation between the SP and the CP, or according to both the corresponding relation between the service and the content and the corresponding relation between the SP and the CP; and sending the service message including the corresponding content to a user. Through the method according to the present invention, the generation efficiency and configuration flexibility of the service message may be improved, the supervision and control of the SP service content by a third party is achieved, and the management of the cooperation relation between the SP and the CP by the third party is also achieved.

## Description

This application claims priority to Chinese Patent Application No. 200910110172.3, filed with the Chinese Patent Office on November 10, 2009 and entitled "METHOD AND APPARATUS FOR GENERATING SERVICE MESSAGE", which is incorporated herein by reference in its entirety.

### FIELD OF THE INVENTION

The present invention relates to the field of communications technologies, and in particular, to a method and an apparatus for generating a service message.

### BACKGROUND OF THE INVENTION

Currently, in the field of value-added services in telecommunications, a service server of a service provider (Service Provider, SP) accesses a gateway of an operator, to provide value-added services together with the operator. Due to high technical requirements, an ordinary content provider (Content Provider, CP) is incapable of developing a service alone, and can only choose to cooperate with the SP. The CP publishes content to be used in the service on the service server of the SP, and the service gateway delivers the content to a terminal user.

In the implementation of the present invention, the inventor finds that in the method for generating a service message in the prior art, a service message including content is eventually formed and delivered to a user at a low efficiency; and due to the cooperation mode among the operator, the SP and the CP, the service server of the SP accesses the gateway of the operator to provide services, and the CP can only provide content for the service on the service server of the SP, where such mode does not facilitate the supervision and control of the service content of the SP by the third party (for example, the operator).

### SUMMARY OF THE INVENTION

An embodiment of the present invention is directed to provide a method for generating a service message, which includes:
receiving a service message sent by a service provider SP device and content sent by a content provider CP device;
generating a service message including corresponding content, according to a preset corresponding relation between the service and the content, or according to a preset corresponding relation between the SP and the CP, or according to both the corresponding relation between the service and the content and the corresponding relation between the SP and the CP; and
sending the service message including the corresponding content to a user.

An embodiment of the present invention provides an apparatus for generating a service message, which includes:
a content access module, configured to receive content uploaded by a CP and save the content;
an interworking management module, configured to set a corresponding relation between a service and the content, or set a corresponding relation between an SP and the CP, or determine a corresponding rule according to both the corresponding relation between the service and the content and the corresponding relation between the SP and the CP; and
a service access module, configured to receive a service message sent by the SP, query the interworking management module, and according to the corresponding relation and the corresponding rule that are set in the interworking management module, generate a service message including corresponding content.

In the embodiments of the present invention, a service request delivered by the SP service no longer directly carries a content entity, and the content entity is automatically added into the service message according to the matching relation in the technical solutions according to the embodiments of the present invention. Therefore, the generation efficiency and configuration flexibility of the service message are improved, the supervision and control of the SP service content by the third party is achieved, and the management of the cooperation relation between the SP and the CP by the third party is also achieved.

### BRIEF DESCRIPTION OF THE DRAWINGS

To illustrate the technical solutions according to the embodiments of the present invention or in the prior art more clearly, the accompanying drawings for describing the embodiments or the prior art are introduced briefly in the following. Apparently, the accompanying drawings in the following description are only some embodiments of the present invention, and persons of ordinary skill in the art can derive other drawings from the accompanying drawings without creative efforts.
FIG. 1 is a flow chart of a method for generating a service message according to an embodiment of the present invention; and
FIG 2 is a structural diagram of an apparatus for generating a service message according to an embodiment of the present invention.

### DETAILED DESCRIPTION OF THE EMBODIMENTS

### Embodiment 1

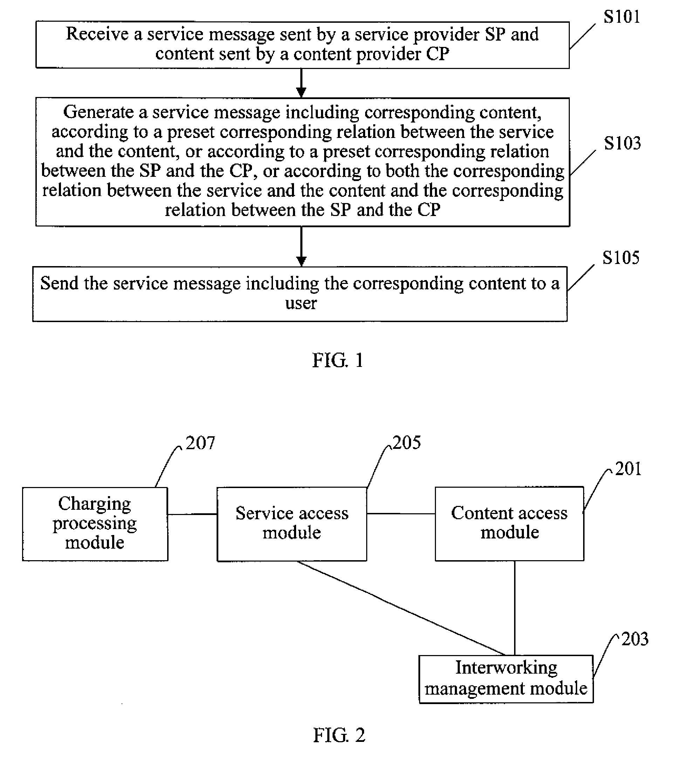

FIG. 1 is a flow chart of a method for generating a service message according to an embodiment of the present invention, which includes the following steps.

S101: Receive a service message sent by a service provider SP device and content sent by a content provider CP device.

S103: Generate a service message including corresponding content, according to a preset corresponding relation between a service and the content, or according to a preset corresponding relation between the SP and the CP, or according to both the corresponding relation between the service and the content and the corresponding relation between the SP and the CP.

S105: Send the service message including the corresponding content to a user.

It can be understood that, the two steps of "receive the service message sent by the SP" and "receive the content sent by the CP " in S101 are not in a strict time sequence, and may be implemented as: receiving the related content sent by the CP and saving the content, and then receiving the service message sent by the SP and performing relevant processing, or vice versa.

The creator of the corresponding relation between the service and the content may be a third party except for the SP and the CP, for example, an operator management system.

The presetting of the corresponding relation between the SP and the CP may specifically be:
pre-establishing a corresponding relation between the SP and the CP, where the corresponding relation may be regarded as a cooperation relation between the SP and the CP, or an interworking rule between the SP and the CP, that is, the content provided by a CP may only be used by the service of an SP in the cooperation relation with the CP, and there may be one or more such SPs; or the service of an SP may only cooperate with a CP in the cooperation relation with the SP, and there may be one or more such CPs.

The presetting of the corresponding relation between the service and the content may specifically be:
pre-establishing a corresponding relation between certain content and a specific service, where one or more types of content can only be provided for use in one or more fixed types of services, for example, the content of a multimedia greeting card is particularly provided for use in a mobile greeting card service; weather forecast information is particularly provided for use in a weather forecast service; and definitely, the weather forecast information may also be particularly provided for use in both the weather forecast service and a mobile newspaper service, or both the weather forecast information and news information are particularly provided for use in the mobile newspaper service.

The according to both the corresponding relation between the service and the content and the corresponding relation between the SP and the CP may specifically be:
when receiving a service message sent by an SP, matching a corresponding CP, and if the matching succeeds, determining that a CP in cooperation exists, and then determining whether content that is provided by the CP and available to the service exists, that is, whether the content matching the specific service exists; or vice versa, that is, determining whether specific content corresponding to a specific service exists, and if the specific content exists, confirming or authenticating whether the CP providing the content is a CP in cooperation.

The specific setting methods and matching methods for the corresponding relations may be combined and expanded in the above described situations, which are not limited in the embodiment of the present invention.

The service may be a short message service, a multimedia message service, a multimedia ringing tone service or an email service. The corresponding service message may be a short message, a multimedia message, a multimedia ringing tone service, or an email message.

The content may be a multimedia greeting card, weather forecast information, or news information.

The service and the content may include, but are not limited to, one or more of the foregoing types, and the embodiment of the present invention is not limited herein.

In the embodiment of the present invention, the service message delivered by the SP service no longer directly carries a content entity, and the corresponding content entity is automatically added into the service message according to the preset corresponding relation in the technical solutions according to the embodiments of the present invention. Therefore, the generation efficiency and configuration flexibility of the service message are improved, the supervision and control of the SP service content by the third party (for example, the operator) is achieved, and the management of the cooperation relation between the SP and the CP by the third party is also achieved.

When or before or after the service message including the corresponding content is sent to the user, service fee information may be output, where the service fee information includes an identifier of the SP and an identifier of the CP, which are used in distributing the revenue between the SP and the CP. For example, the fee information is directly provided for a connected charging system; or the fee information is carried in a delivered message, and provided for the charging system indirectly through an enabler.

By using the method according to the embodiment of the present invention, unified revenue distribution and settlement may be implemented, and the settlement process between the CP and the SP is deleted.

### Embodiment 2

The implementation of the present invention is further described below in combination with a specific scenario.
1. SP1 provides a mobile greeting card service and a weather forecast service;
   SP2 provides a mobile newspaper service;
   CP1 particularly provides a multimedia greeting card; and
   CP2 particularly provides weather forecast information.

A third party (for example, an operator management system) establishes a cooperation relation between CP1 and SP1 (the mobile greeting card service), establishes a cooperation relation between CP2 and SP1 (the weather forecast service), and establishes a cooperation relation between CP2 and SP2 (the mobile newspaper service).

The table structure of the corresponding relations between the CPs and the SPs may be as shown in Table 1:

**Table 1**

| **CP ID** | **SP ID** | **Service ID** |
|---|---|---|
| CP1 | SP1 | Mobile greeting card service ID |
| CP2 | SP1 | Weather forecast service ID |
| CP2 | SP2 | Mobile newspaper service ID |
| ... | ... | ... |

The CPs and the SPs may form a many-to-many relation, for example, multiple CPs are corresponding to one SP, or multiple SPs are corresponding to one CP, which is not limited in the embodiment of the present invention.
2. CP1 uploads a multimedia greeting card according to the corresponding relation in Table 1, and specifies that the multimedia greeting card is provided for the mobile greeting card service of SP 1.

CP2 uploads a piece of weather forecast information according to the corresponding relation in Table 1, and specifies that the piece of weather forecast information is provided for the weather forecast service of SP1 and the mobile newspaper service of SP2.

Table 1 is generally set in the operator management system and exists in advance. The specifying by a CP a corresponding SP after the uploading by the CP describes a use state of the uploaded content, where the use state of the uploaded content is obtained according to Table 1. The "specifying that the weather forecast information is provided for the weather forecast service of SP1 and the mobile newspaper service of SP2" should be understood as specifying according to Table 1.
3. Save the multimedia greeting card and the weather forecast information provided by CP1 and CP2, and generate content IDs for the multimedia greeting card and the weather forecast information (for example, the ID of the multimedia greeting card uploaded by CP1 is 1, and the ID of the weather forecast information uploaded by CP2 is 2); and then, save the corresponding relation between the content and the service through each content identifier and the corresponding service identifier, where the corresponding relations may be saved in the form of a corresponding relation table, and the corresponding relations are set as follows, for example, the multimedia greeting card content is generally applicable to the mobile greeting card service and is inapplicable to the weather forecast service, but the weather forecast content is applicable to both the weather forecast service and the mobile newspaper service.

For example, the table structure of the corresponding relations between the services and the content may be as shown in Table 2:

**Table 2**

| **Content ID** | **Service ID** |
|---|---|
| Multimedia greeting card ID | Mobile greeting card service ID |
| Weather forecast information ID | Weather forecast service ID |
| Weather forecast information ID | Mobile newspaper service ID |
| ... | ... |

4. The third party (for example, the operator management system) provides a Web Service service message transmission interface and a content query interface for the SP. The mobile greeting card service system of SP1 may invoke the content query interface to query the content information available to the service, select a content ID according to certain service logic, and invoke the multimedia message transmission interface to send a message. The multimedia message transmission interface carries basic information such as the selected content ID, the mobile greeting card service ID, the ID of SP1, and a subscriber number of the service. Table 1 and Table 2 are not used here, and will be used for authenticating the message in the following. Since the content query interface is provided, after the content ID is found, the SP puts the found information such as the content ID into the message to be sent.
5. After receiving the multimedia message delivered by SP1, query Table 2 of the corresponding relations between the services and the content according to the mobile greeting card service ID and the content ID in the multimedia message, where if a record is found, it is deemed that a corresponding relation exists between the mobile greeting card service and the selected content, for example, the corresponding relation between the multimedia greeting card ID and the mobile greeting card service ID, and the authentication succeeds. It should be noted that, Table 1 and Table 2 are mainly used for authentication, and since the message originally has no content, the content entity must be loaded according to the IDs after the authentication of the corresponding relation succeeds.
6. After the authentication succeeds, acquire, according to the content ID in the multimedia message, a corresponding content entity from the corresponding relation table of the content and the content IDs. It can be understood that, a content ID is generated for the content such as the weather forecast and the mobile newspaper, which is actually a corresponding relation table of the content and the content ID.
7. Send the content entity through the multimedia message to a service subscriber according to the service subscription information and the service subscriber number.

When the corresponding relation is established in the embodiment of the present invention, the corresponding relation between the SP and the CP and the corresponding relation between the service and the content are both considered. It can be understood that, the content matching with the service message may be determined merely according to the corresponding relation between the SP and the CP, for example, only referring to Table 1 without Table 2, the corresponding relation between the SP and the CP in Table 1 is merely used to authenticate the sent message, and if the authentication succeeds, the content entity of the corresponding content ID may be loaded; or, the content matching with the service message is determined merely according to the corresponding relation between the service ID and the content ID, for example, only referring to Table 2. Persons skilled in the art may understand that other equivalent or similar corresponding manners also fall within the scope of the embodiment of the present invention.

In the embodiment of the present invention, the service request delivered by the SP service no longer directly carries a content entity, and the content entity is automatically added into the service message in the embodiment of the present invention. Therefore, the generation efficiency and configuration flexibility of the service message are improved, the supervision and control of the SP service content by the third party (for example, the operator) is achieved, and the management of the cooperation relation between the SP and the CP by the third party is also achieved.

When or after the service message including the corresponding content entity is sent to the service subscriber, service fee information may be output, where the service fee information includes an identifier of the SP and an identifier of the CP, used in unified revenue distribution for the SP and the CP. For example, the fee information is directly provided for a connected charging system; or the fee information is carried in a delivered message, and provided for the charging system indirectly through an enabler.

By using the method provided in the embodiment of the present invention, unified revenue distribution and settlement may be implemented, and the settlement process between the CP and the SP is deleted.

### Embodiment 3

As shown in FIG 2, FIG. 2 is a structural diagram of an apparatus for generating a service message according to an embodiment of the present invention, where the apparatus includes: a content access module 201, an interworking management module 203, and a service access module 205.

The content access module 201 is configured to receive content uploaded by a CP and save the content; and further generate a content ID for the content and notify the interworking management module 203 of the content ID.

The interworking management module 203 is configured to set a corresponding relation between a service and the content, or set a corresponding relation between an SP and the CP, or determine a corresponding rule according to both the corresponding relation between the service and the content and the corresponding relation between the SP and the CP, where for the setting of the specific corresponding relation and rule, reference may be made to the description or proper expansion thereof in Embodiment 1 or Embodiment 2, which will not be repeated herein.

The service access module 205 is configured to receive a service message sent by the SP, query the interworking management module, and according to the corresponding rule set in the interworking management module 203 and the content saved in the content access module, generate a service message including corresponding content, and further send the service message including the corresponding content to a related enabler for processing, for example, a multimedia message service center or a short message service center.

The apparatus further includes a charging processing module 207, where the charging processing module 207 is connected to the service access module 205, and configured to provide charging information for the charging system, where the charging information includes identifiers of the SP and the CP, used in unified revenue distribution for the SP and the CP.

With the apparatus provided by the embodiment of the present invention, the service message delivered by the SP service no longer directly carries a content entity, and the content entity is automatically added into the service message by the apparatus provided in the embodiment of the present invention. Therefore, the generation efficiency and configuration flexibility of the service message are improved, the supervision and control of the SP service content by the third party (for example, the operator) is achieved, and the management of the cooperation relation between the SP and the CP by the third party is also achieved. Meanwhile, the charging processing module provides charging information for the charging system, so that unified revenue distribution and settlement may be implemented, and the settlement process between the CP and the SP is deleted.

Persons of ordinary skill in the art can understand that all or a part of the steps of the method according to the embodiments of the present invention may be implemented by a program instructing relevant hardware. The program may be stored in a computer readable storage medium. When the program is run, the steps of the method according to the embodiments of the present invention are performed. The storage medium may be any medium that is capable of storing program codes, such as a ROM, a RAM, a magnetic disk, or an optical disk.

It will be apparent that persons skilled in the art can may various modifications and variations to the present invention without departing from the scope or spirit of the invention. In view of the foregoing, provided the modifications and variations of the present invention fall within the scope of the following claims and their equivalents, it is intended that the present invention covers these modifications and variations.

## Claims

1. A method for generating a service message, comprising the following steps:
receiving a service message sent by a service provider SP device and content sent by a content provider CP device;
generating a service message including corresponding content according to a preset corresponding relation between the service and the content, or according to a preset corresponding relation between the SP and the CP, or according to both the corresponding relation between the service and the content and the corresponding relation between the SP and the CP; and
sending the service message including the corresponding content to a user.

2. The method according to claim 1, wherein when or before or after the service message including the corresponding content is sent to the user, the method further comprises:
outputting service fee information, wherein the service fee information includes an identifier of the SP and an identifier of the CP, used for instructing a charging system to implement unified revenue distribution for the SP and the CP.

3. The method according to claim 1, wherein
the corresponding relation between the service and the content is specifically that a type of content is corresponding to multiple services, or that a type of service is corresponding to multiple types of content; and
the corresponding relation between the SP and the CP is specifically that an SP is corresponding to multiple CPs, or that a CP is corresponding to multiple SPs.

4. The method according to claims 1 to 3, wherein
the generating the service message including the corresponding content according to both the corresponding relation between the service and the content and the corresponding relation between the SP and the CP comprises:
determining, according to the preset corresponding relation between the SP and the CP, whether an SP or a CP in cooperation exists, and determining, according to the corresponding relation between the service and the content, whether the SP or CP in cooperation provides a corresponding service or corresponding content; or
determining, according to the preset corresponding relation between the service and the content, whether a corresponding service or corresponding content exists, and determining, according to the corresponding relation between the SP and the CP, whether the corresponding service or corresponding content is provided by the SP or CP in cooperation; and
generating the service message including the corresponding content.

5. The method according to claim 4, wherein
the service at least comprises one or more of the following types: a short message service, a multimedia message service, a multimedia ringing tone service and an email service; and
the content at least comprises one or more of the following types: a multimedia greeting card, weather forecast information and news information.

6. An apparatus for generating a service message, comprising:
a content access module, configured to receive content uploaded by a CP and save the content;
an interworking management module, configured to set a corresponding relation between a service and the content, or set a corresponding relation between an SP and the CP, or determine a corresponding rule according to both the corresponding relation between the service and the content and the corresponding relation between the SP and the CP; and
a service access module, configured to receive a service message sent by the SP, query the interworking management module, and generate a service message including corresponding content, according to the corresponding relation and the corresponding rule that are set in the interworking management module and the content saved in the content access module.

7. The apparatus for generating a service message according to claim 6, further comprising a charging processing module, wherein
the charging processing module is connected to the service access module, and configured to provide fee information for the charging system, wherein the fee information includes an identifier of the SP and an identifier of the CP, used for instructing the charging system to implement unified revenue distribution for the SP and the CP.
